# EUROPEAN PATENT APPLICATION

(11) **EP 2 361 788 A1**
(43) Date of publication of application: **31.08.2011**
(21) Application number: 10190615.4
(22) Date of filing: 10.11.2010
(51) Int. Cl.: B60B 29/00

(54) **Tire changing device**

(30) Priority: 22.02.2010 US 710183
(71) Applicant: Silvestri, Claudio, Manotick ON K4M 1K2 (CA); Price, Dwayne William, Greely ON K4P 1R1 (CA)
(72) Inventor: Silvestri, Claudio, Manotick ON K4M 1K2 (CA); Price, Dwayne William, Greely ON K4P 1R1 (CA)
(74) Representative: Bloch & Bonnétat

(57) **Abstract**

A tire changing device (10) is provided comprising two generally parallel spaced apart support members (11, 12) connected together through an intermediate linking member (16), said support members also provided with roller members (14, 15) for working in cooperation with the telescopic movement of interconnected members (20, 21) of said linking member (16) for positioning a tire/rim combination for mounting/demounting on a vehicle wheel hub.

## Description

### CROSS-REFERENCE TO RELATED APPLICATIONS

Not applicable.

### STATEMENT REGARDING FEDERALLY SPONSORED RESEARCH OR

### DEVELOPMENT

Not applicable.

### REFERENCE TO A "SEQUENCE LISTING"

Not applicable.

### FIELD OF INVENTION

The present invention relates generally to a device for use in changing tires on cars and trucks and more particularly relates to such device for accomplishing this work efficiently and quickly.

### DISCUSSION OF THE PRIOR ART

The prior art broadly includes devices for accomplishing the above recited end result. However, the devices known to the applicant are generally cumbersome to use and more specifically do not accomplish the desired end result conveniently.

In order to change tires on a vehicle, the tire must be lifted off the hub once the nuts have been removed from the studs extending from the hub, and conversely, the replacement tire must be lifted back for proper positioning during mounting of the tire on the hub. Traditionally, such lifting and positioning has been done manually. However, in numerous cases the tires are too heavy and/or unwieldy to allow for efficient and quick changing by a single person.

The closest prior art known to the applicant is found in U.S. patent numbers 3,828,955; 4,286,369; and 4,550,835. U.S. patent number 4,550,835 would appear to propose the closest device to the applicant's structure disclosed herein but for the fact that U.S. patent number 4,550,835 does not provide for easy, convenient vertical adjustment and positioning of the replacement tire during mounting of the tire on the hub.

### SUMMARY OF THE INVENTION

The present invention overcomes the above referred to difficulties in a convenient, simple and efficient manner.

Accordingly, it is a primary object of the present invention to provide a tire changing device for lifting and positioning a tire overcoming the above-mentioned disadvantages of the prior art.

Another object of the present invention is to provide a tire changing device with wheel assemblies for easy transport of the tire.

Another object of the present invention is to provide a tire changing device whose rolling members allow for easy vertical adjustment of the tire and whose shape enables a tire to be conveniently rolled on, positioned and retained thereon.

Yet another object of the present invention is to provide a tire changing device according to claim 1. Preferably, said support members (11, 12) are pivotally engaged with said intermediate linking member and they comprise wheels.

Other objects and advantages of the present invention will become apparent from the following description of the preferred embodiment taken in conjunction with the accompanying drawings.

### BRIEF DESCRIPTION OF THE INVENTION

Figure 1 is a perspective view showing the tire changing device and illustrating schematically the positioning of a tire thereon and relative movement of said tire;

Figure 2 is a top perspective view of the tire changing device of the present invention; and

Figure 3 is a broken perspective view of the tire changing device of the present intention.

### DESCRIPTION OF THE REFERRED EMBODIMENT

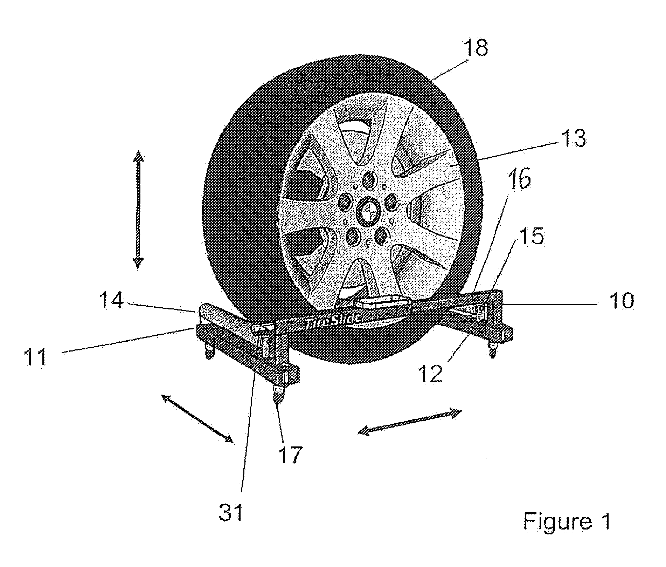

As seen in Figure 1, the tire changing device of the present invention has been indicated generally by reference numeral 10 and includes in combination first and second spaced apart generally parallel support members 11 and 12, each of which is made out of a sturdy material, such as metal or aluminium, strong enough to withstand the weight of a vehicle tire 18 and the rim it is mounted on 13. The support members 11 and 12 are equipped with wheels 17 for easy transport and positioning of the tire changing device 10 relative to the vehicle wheel hub. The support members 11 and 12 are also provided with roller members 14 and 15 positioned and attached on the upper surface of said support members 11 and 12 and running parallel to said support members 11 and 12.

Said support members 11 and 12 are connected together through intermediate linking member 16 in a perpendicular plane resulting in an overall generally U-shaped configuration of the tire changing device 10.

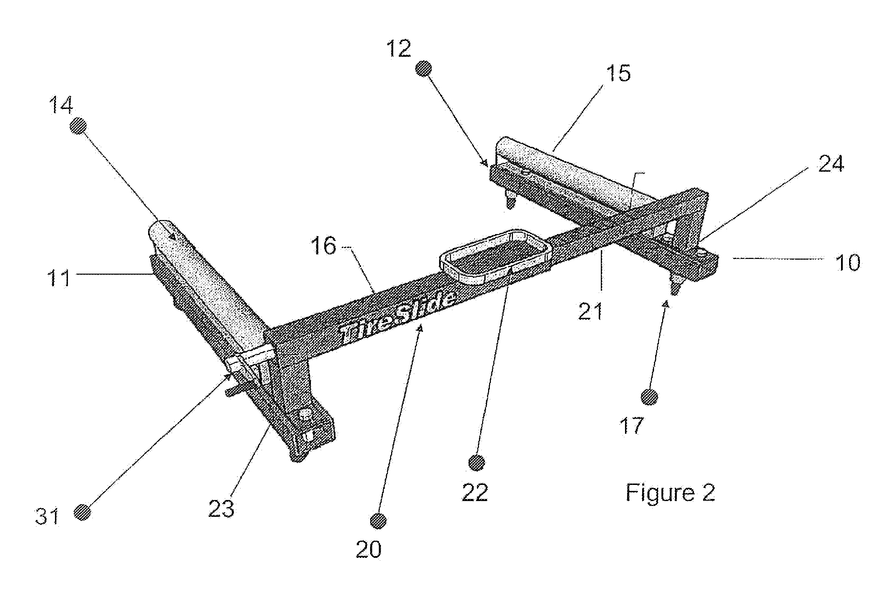

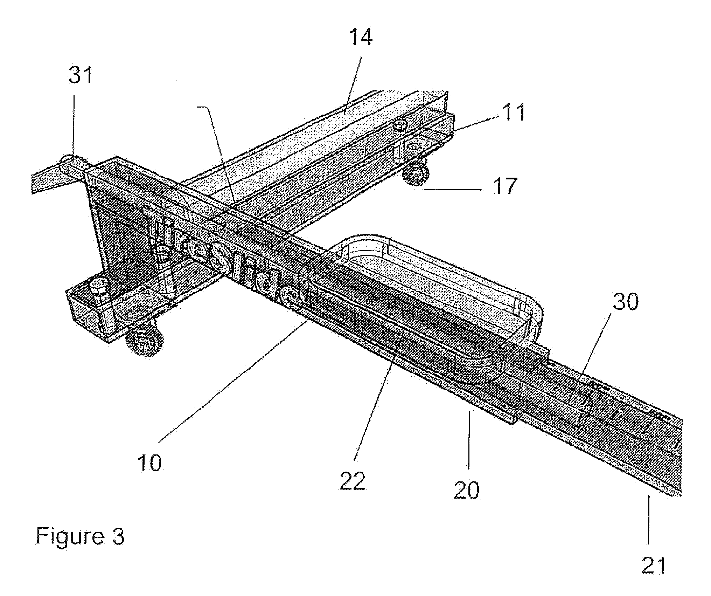

As seen in Figure 2, the linking member 16 comprises two interconnected members 20 and 21, said members 20 and 21 slideably engaged to ensure horizontal movement relative to one another. As best seen in Figure 3, a threaded rod member 30 is securely positioned within the confine of the interconnected members 20 and 21 and attached to a crank handle 31 which can then be operated and resulting in a telescopic movement of the interconnected members 20 and 21 relative to one another in a horizontal plane.

Optionally, the tire changing device 10 of the present invention can be equipped with a tray 22 for easy access to the nuts required to attach the tire/rim combination 18/13 to the studs of the vehicle wheel hub. It could also be advantageous to make the support members 11 and 12 pivotally engaged with intermediate linking member 16, respectively 23 and 24, so that said members 11 and 12 can be drawn in and made to rest generally parallel to said intermediate linking member 16 for the purposes of carrying and storing said tire changing device 10.

The operation of the tire changing device 10 will now be described. As is conventional, the wheel hub of a vehicle has threaded studs extending therefrom to receive nuts which damp the rim of the tire to said wheel hub. Once the vehicle is sufficiently jacked up to provide clearance between the tire and the ground surface, a tire rim combination 18/13 is positioned onto the tire changing device 10 by operating the crank handle 31 to make the support members 11 and 12 get closer to one another so as to grip said tire/rim combination 18/13 and vertically lift it off the ground through the relative motion of said interconnected members 20 and 21 and the rolling motion of said roller members 14 and 15, The tire changing device 10 now loaded with the tire/rim combination 18/13 can then be moved to and in proximity to the vehicle wheel hub. By adjusting the distance between the roller members 14 and 15, either inwardly or outwardly, the tire/rim combination 18/13 will either rise up or drop down, respectively, between said roller members 14 and 15 for final positioning of the rim 13 of the tire/rim combination 18/13 before clamping of said rim to the vehicle wheel hub.

It will thus be seen that a tire changing device has been provided that can easily be handled and stored and which efficiently enables one to more easily change a tire.

## Claims

1. A tire changing device (10) including in combination a first and second spaced apart parallel support members (11, 12), said support members comprising roller members (14, 15) positioned and attached onto the upper surface of said support members (11, 12), said support members (11, 12) connected together through an intermediate linking member (16), said linking member (16) comprising two interconnected members (20, 21) slideably engaged to provide horizontal movement relative to one another through the operation of a threaded rod member (30) to provide for vertical adjustment of a tire/rim combination onto the generally U-shaped tire changing device (10).

2. A tire changing device as claimed in claim 1, wherein said support members (11, 12) are pivotally engaged with said intermediate linking member (16).

3. A tire changing device as claimed in claim 1, wherein said support members (11, 12) comprise wheels (17).

4. A tire changing device as claimed in claim 1, wherein a tray (22) is provided.

5. A tire changing device as claimed in claim 1, wherein said threaded rod member (30) is operated with a crank handle (31).
